# EUROPÄISCHE PATENTSCHRIFT

(11) **EP 2 838 781 B1**
(45) Veröffentlichungstag und Bekanntmachung des Hinweises auf die Patenterteilung: **18.04.2018**
(21) Anmeldenummer: 13705962.2
(22) Anmeldetag: 13.02.2013
(51) Int. Cl.: B62K 19/32, B62K 21/00, B62J 99/00

(54) **ROTORSYSTEM FÜR EIN FAHRRAD**
ROTOR SYSTEM FOR A BICYCLE
SYSTÈME DE ROTOR POUR BICYCLETTE

(30) Priorität: 20.04.2012 DE 102012103465; 21.11.2012 DE 102012111204
(43) Veröffentlichungstag der Anmeldung: 25.02.2015
(73) Patentinhaber: Göring, Thomas, 76706 Dettenheim (DE); Göring, Wolfgang, 76706 Dettenheim (DE)
(72) Erfinder: GÖRING, Thomas, 76185 Karlsruhe (DE)
(74) Vertreter: Patentanwälte Hosenthien-Held und Dr. Held
(86) Internationale Anmeldenummer: PCT/EP2013/052900
(87) Internationale Veröffentlichungsnummer: WO 2013/156175

(56) Entgegenhaltungen:
- DE-C2- 19 929 093
- DE-U1-202004 017 094
- US-A- 5 605 076
- US-B1- 7 757 820
- US-B1- 7 810 614

## Beschreibung

Die Erfindung betrifft ein Rotorsystem für ein Fahrrad mit den Merkmalen des Oberbegriffs des Anspruches 1.

Aus der DE 199 29 093 C2 ist ein Rotorsystem für ein Fahrrad zur 360°-drehbaren Lagerung einer Gabel und zur Übertragung von Betätigungen von Bremszügen bekannt, mit einer im Bereich der Lagerung der Gabel angeordneten Rotoreinheit, welche als Ganzes relativ zur Gabel in axialer Richtung bewegbar ist und welche wenigstens zwei Übertragungselemente aufweist, die relativ zueinander drehbar sind, wobei die Übertragungselemente wenigstens in radialer Richtung von einem Gehäuse umgeben sind.

Die DE 20 2004 017 094 U1 offenbart ein Rotorsystem mit fluidgefüllten Leitungen im Gabelschaft und ein Rotorsystem der eingangs genannten Art. Bei Rotorsystemen letzterer Art weisen die Übertragungselemente jeweils einen Flansch als Anbindungselement auf, während an den Seelen der Bowdenzüge jeweils ein abgeflachter Nippel angeformt ist, der am zugeordneten Flansch formschlüssig anliegt. Rotorsysteme, bei denen die Seelen der Bowdenzüge mittels angeformter runder Nippel an den Übertragungselementen eingehängt sind, also nur mit Linienberührung anstatt formschlüssig, offenbaren die US 5,605,076 A, US 7,757,820 B1 und US 7,810,614 B1. Der nächstliegende bekanntgewordene Stand der Technik ist der DE 20 2004 017094 zu entnehmen. Ein anderes Rotorsystem, welches ebenfalls eine 360°-Drehung der Gabel ermöglicht, ist aus der WO 2012/005610 A2 bekannt. Ein erster Bowdenzug ist vom Lenker her in den Gabelschaft geführt. Am Ende seiner Seele ist ein Steg befestigt, welcher durch Gabelschaft-Öffnungen aus dem Gabelschaft herausragt, wo er vom ersten Übertragungselement aufgenommen wird. Die Anbringung der Seele des zum Hinterrad führenden zweiten Bowdenzuges am oberen, ringförmigen, zweiten Übertragungselement erfolgt mittels eines am Übertragungselement angeschraubten(d.h. nicht hilfsmittelfrei angebrachten), rechtwinklig abgewinkelten Halters, in dessen sich radial nach außen erstreckenden Bereich, welcher mit einer geschlitzten Aufnahmeöffnung zum Einführen der Seele versehen ist, das verdickt ausgebildete Ende der Seele eingehängt wird.

Am Gehäuse ist ein vergleichbarer, umgekehrt angeordneter Gegenhalter angeschraubt, welcher mit seinem sich in radialer Richtung nach außen erstreckenden Bereich, der entsprechend dem des vorstehend genannten Halters ausgebildet ist, von un - ten gegen den ersten Halter anliegt und denselben abstützt. Diese Art der Anbringung entspricht auch der technischen Realisierung der DE 199 29 093 C2, in welcher die Anbringung der Seelen der als Bremszüge dienenden Bowdenzüge nur schematisch dargestellt ist.

In der FR 571 408 ist eine Übertragungsmechanik bekannt, welche Stangen und Hebel verwendet. Im Vorbau ist eine Kurbel gelagert, an welcher eine in den Gabelschaft eingeführte Stange angelenkt ist, welche im Bereich des unteren Endes einen Steg trägt, der durch Gabelschaft-Öffnungen aus dem Gabelschaft herausragt. Ein erstes Übertragungselement sitzt auf dem Steg. Das zweite Übertragungselement ist gabelförmig ausgebildet, mit dem Schaft am Übergang vom Steuerrohr zum Unterrohr angelenkt und mit den Gabelspitzen auf dem ersten Übertragungselement aufliegend. Am Schaft des zweiten Übertragungselements ist ein Bowdenzug befestigt, welcher weiter durch das Unterrohr geführt ist. Die Übertragungselemente bilden keine Einheit, sondern führen unterschiedliche Bewegungen aus, wenn eine Bremsung vorgenommen wird.

Der vorliegenden Erfindung liegt die Aufgabe zugrunde, ein Rotorsystem der eingangs genannten Art zu verbessern. Insbesondere soll die Bowdenzuganbringung vereinfacht werden, wobei das gesamte Rotorsystem kostengünstiger herstellbar sein soll.

Diese Aufgabe wird durch ein Rotorsystem mit den Merkmalen des Anspruches 1 gelöst. Weitere vorteilhafte Ausgestaltungen sind Gegenstand der Unteransprüche.

Ein Fahrrad, das insbesondere als BMX-Freestyle-Rad ausgebildet ist, weist ein erfindungsgemäßes Rotorsystem auf, um ein Verdrillen der als Bremszüge dienenden Bowdenzüge zu vermeiden und die Hinterradbremse jederzeit betätigen zu können. Das Fahrrad, insbesondere wenn es als Mountainbike ausgebildet ist, kann auch ein erfindungsgemäßes Rotorsystem für solche Bowdenzüge aufweisen, welche als Schaltzüge dienen, um die Gangschaltung jederzeit betätigen zu können.

Die beiden Übertragungselemente bilden die wesentlichen Bestandteile einer Rotoreinheit des erfindungsgemäßen Rotorsystems. Ein erster Bowdenzug der vorgesehenen Bowdenzüge ist vom Lenker bis zur Rotoreinheit geführt und steht in Wirkverbindung mit dem ersten Übertragungselement. Mit dem zweiten Übertragungselement steht ein zweiter Bowdenzug der vorgesehenen Bowdenzüge in Wirkverbindung, welcher dann von der Rotoreinheit zum Hinterrad des Fahrrades, insbesondere zu einer Hinterradbremse oder zu einer Gangschaltung, geführt ist. Die beiden Übetragungselemente wirken in axialer Richtung zusammen, um die Betätigung der Bowdenzüge (genauer gesagt des ersten Bowdenzuges auf den zweiten Bowdenzug) zu übertragen. Der Gabelschaft definiert die axiale Richtung. Für die direkte oder indirekte Anbringung der Seelen der Bowdenzüge an den Übertragungselementen weisen letztere jeweils Anbindungsbereiche auf. Der Begriff "indirekt" soll vorliegend die Verwendung eines separat ausgebildeten und lösbar montierten Zwischenbauteils bezeichnen, der Begriff "direkt" das Fehlen eines derartigen Zwischenbauteils. Der Begriff "lösbar" soll eine Trennungsmöglichkeit ohne Zerstörung bezeichnen.

Der erfindungsgemäßer Anbindungsbereich bei wenigstens einem der Übertragungselemente (vorzugsweise dem zweiten Übertragungselement) ist vollständig oder nahezu vollständig innerhalb des Steuerrohres (d.h. radial innerhalb des Steuerrohres) angeordnet, ragt also nicht radial nach außen, was die Montage erleichtert. Der Gabelschaft definiert die radiale Richtung. An diesem Anbindungsbereich ist ein Verbindungselement formschlüssig anbringbar, wobei das Verbindungselement wenigstens in axialer Richtung direkt mit dem Anbindungsbereich zusammenwirkt. Andererseits wirkt das Verbindungselement mit dem rotorseitigen Ende der zugeordneten Seele (vorzugsweise des zweiten Bowdenzuges) lösbar zusammen (und ist dann separat von diesem Ende ausgebildet) oder ist mit diesem Ende einstückig verbunden. Diese Ausbildung ermöglicht eine einfache, schnelle Möglichkeit der Anbringung der Seele am Übertragungselement. Ein Werkzeug, welches bisher zum Anschrauben des Halters für das Ende der Seele erforderlich war, ist nicht mehr erforderlich. Zudem kann durch das Entfallen der Schraube die Teilezahl verringert werden. Bevorzugt umschließt das Verbindungselement wenigstens teilweise das rotorseitige Ende der zugeordneten Seele. Das Ende der Seele kann dann gestreckt sein (anstatt eine Schlaufe zu bilden). Insbesondere bevorzugt ist das Verbindungselement direkt am Seelenende angespritzt oder an diesem angegossen oder mit diesem verpresst oder anderweitig einstückig verbunden, so dass die Teilezahl weiter verringert werden kann.

Zur Anbringung am Anbindungsbereich kann das Verbindungselement einen Vorsprung (Führung) aufweisen, welche mit einer parallel zur Achse des Gabelschaftes (also in axialer Richtung) verlaufenden Führungsnut des zweiten Übertragungsele - ments zusammenwirkt. Dieser Vorsprung des Verbindungselements kann beispielsweise quader- oder schwalbenschwanzförmig ausgebildet sein. Alternativ weist das Verbindungselement zwei Vorsprünge auf, welche unter elastischer Verformung in hinterschnittene Bereiche des Übertragungselements im Anbindungsbereich clipsartig eingreifen, wobei für den Eingriff eine elastische Verformung des Verbindungselements vorgesehen ist. Durch das Einclipsen ermöglicht sich eine einfache Montage. Einer der beiden Vorsprünge erstreckt sich bevorzugt parallel zur Gabelschaftachse und greift von einer Stirnseite des Übertragungselements in eine entsprechende Öffnung ein. Der zweite der Vorsprünge ist vorzugsweise, aber nicht notwendigerweise, senkrecht hierzu ausgerichtet und greift in radialer Richtung in eine entsprechende Öffnung oder Vertiefung des Übertragungselements ein.

Die beiden Übertragungselemente haben als Grundform einen Zylinderring, d.h. eine Hülse, was eine einfache Lagerung ermöglicht. Die beiden Übertragungselemente können miteinander fluchtend (in axialer Richtung miteinander fluchtend, d.h. axial hinteinander liegend) auf dem Gabelschaft angeordnet sein, was den geringsten radialen Bauraum beansprucht. Sie können aber auch konzentrisch zueinander (in radialer Richtung konzentrisch zueinander, d.h. radial ineinander liegend) angeordnet sein, d.h. das zweite Übertragungselement umschließt - wenigstens abschnittsweise bezüglich seiner axialen Erstreckung - das erste Übertragungselement (oder umgekehrt), was eine einfache und definierte Lagerung der beiden Übertragungselemente relativ zueinander ermöglicht. Die bevorzugte Lagerung ist eine Kombination davon, d.h. teilweise fluchtend und teilweise konzentrisch. Hierfür weisen die beiden Übertragungselemente vorzugsweise Stufen auf, mittels derer sie aufeinander sitzen. Bei alle Lagerungen besteht ein direkter Kontakt zwischen den beiden Übertragungselementen, vorzugsweise ein Gleitkontakt, wofür es sich bei beiden Übertragungselementen jeweils vorzugsweise um ein Kunststoffspritzgussteil handelt. Ein Zwischenring, wie im Stand der Technik verwendet, kann entfallen, so dass die Teilezahl weiter verringert werden kann. Mit dem gleichen Zweck ist vorzugsweise der Anbindungsbereich einstückig am zweiten Übertragungselement ausgebildet.

Die Seele des ersten Bowdenzuges ist vom Lenker her kommend in der Gabelschaft eingeführt, was den bereits vorhandenen Bauraum ausnutzt und Bauraum zwischen Gabelschaft und Steuerrohr spart, also eine besonders schlanke Ausgestaltung des Steuerrohrs ermöglicht. Für die Anbringung der Seele des ersten Bowdenzuges am ersten Übertragungselement ist ein Steg vorgesehen, welcher auf der Seele gelagert ist, im montierten Zustand beispielsweise auf einem Nippel oder dergleichen am Ende der Seele sitzt, und für die Montage relativ zur Seele kippbar ist. Der Steg ragt durch langlochförmige Gabelschaft-Öffnungen in radialer Richtung aus dem Gabelschaft heraus (über den Außenumfang des Gabelschafts hinaus), so dass das erste Übertragungselement, welches außen auf dem Gabelschaft gelagert ist, mit dem Steg verbunden werden kann, beispielsweise aufgesetzt oder aufgepresst. Entsprechend wird der Steg mit seinen Enden in Aufnahmen, insbesondere Öffnungen oder Nuten, eingeführt, um formschlüssig und gegebenenfalls kraftschlüssig mit dem ersten Übertragungselement zusammen zu wirken. Für eine Verbindung mit einem (geringen) kraftschlüssigen Beitrag kann der Steg in das erste Übertragungselement einrasten, wofür der Steg (oder das Übertragungselement) geeignete Rastnasen aufweist, beispielsweise stirnseitig.

Der erste Bowdenzug mit erfindungsgemäßem Steg und der zweite Bowdenzug mit erfindungsgemäßem Verbindungselement sind vormontierte Baugruppen und können separat vom Fahrrad oder von der Rotoreinheit als Ersatzteile oder zusammen mit der Rotoreinheit als Bausatz des Rotorsystems gehandelt werden.

Bausatz des Rotorsystems gehandelt werden.

Um die Seele des zweiten Bodwenzuges, welche mittels des Verbindungselements am Anbindungsbereich des zweiten Übertragungselements angebracht ist, zum Hinterrad zu führen, weist das Steuerrohr, welches die Gabel mittels Steuersätzen lagert, eine - vorzugsweise langlochförmige - Steuerrohr-Öffnung auf, durch welche das Verbindungselement von außen her in das Steuerrohr zum Anbindungsbereich am zweiten Übertragungselement greifen kann.

Vorzugsweise ist ein dritter Bowdenzug vorgesehen, welcher vom Lenker zum Vorderrad zu einer Vorderradbremse geführt ist. Um außer dem ersten Bowdenzug auch diesen dritten Bowdenzug durch den Gabelschaft führen zu können, ist die Befestigungsvorrichtung, welche für die Befestigung des Vorbaus am Gabelschaft vorgesehen ist, entsprechend abgewandelt. In der zu gehörigen Kappe und der im Gabelschaft sitzenden Sternmutter, oder alternativ in der in den Gabelschaft einzuschraubenden Befestigungsschraube, sind zwei Öffnungen oder Durchlässe vorgesehen, nämlich außer dem an sich bekannten zentrischen Durchlass noch ein exzentrischer Durchlass. Gegenüber einem vergrößerten zentrischen Durchlass hat diese Ausbildung der Vorteil, dass der Sitz der Sternmutter im Gabelschaft nicht geschwächt wird. Der erste Bowdenzug, genauer gesagt seine Seele, ist dann durch den zentrischen Durchlass eingeführt, um möglichst mittig am Steg anzugreifen. Der zur Vorderradbremse geführte dritte Bowdenzug ist gegenüber dem bekannten zentrischen Durchlass versetzt durch den exzentrischen Durchlass geführt.

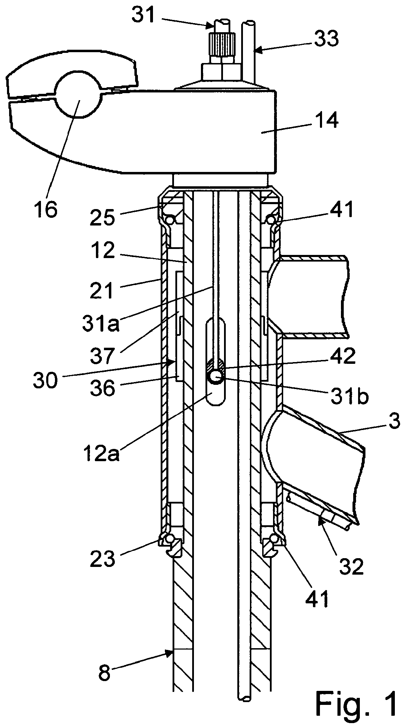

Im Folgenden ist die Erfindung anhand mehrerer in der Zeichnung dargestellten Ausführungsbeispiele näher erläutert. Es zeigen
Fig. 1 eine teilweise geschnitten dargestellte Seitenansicht im Bereich der Lagerung der Gabel samt einer Rotoreinheit gemäß einem ersten Ausführungsbeispiel,

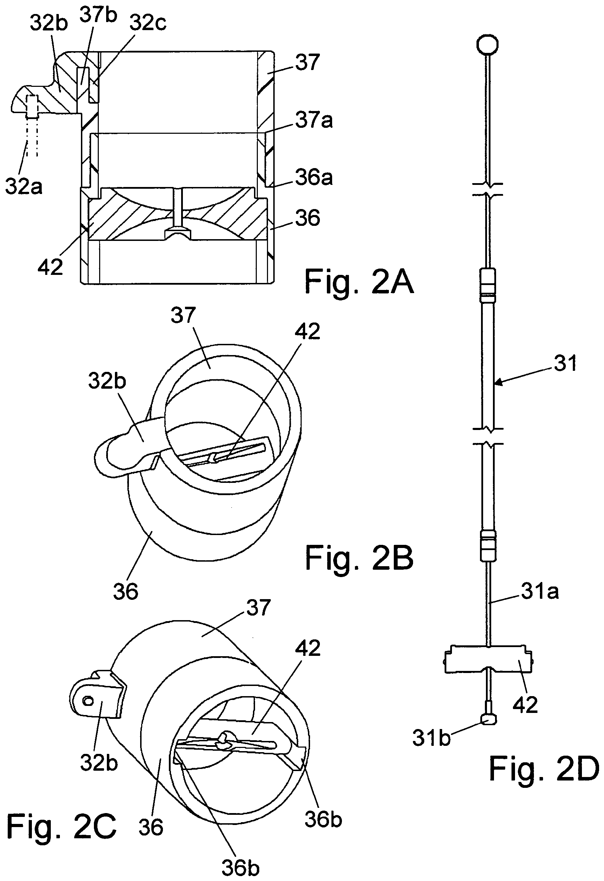

Fig. 2A einen Schnitt durch Übertragungselemente, Verbindungselement und Steg gemäß dem ersten Ausführungsbeispiel,
Fig. 2B eine perspektivische Ansicht Baugruppe von Fig. 2A von oben,
Fig. 2C eine perspektivische Ansicht der Baugruppe von Fig. 2A von unten,
Fig. 2D ein erster Bowdenzug,

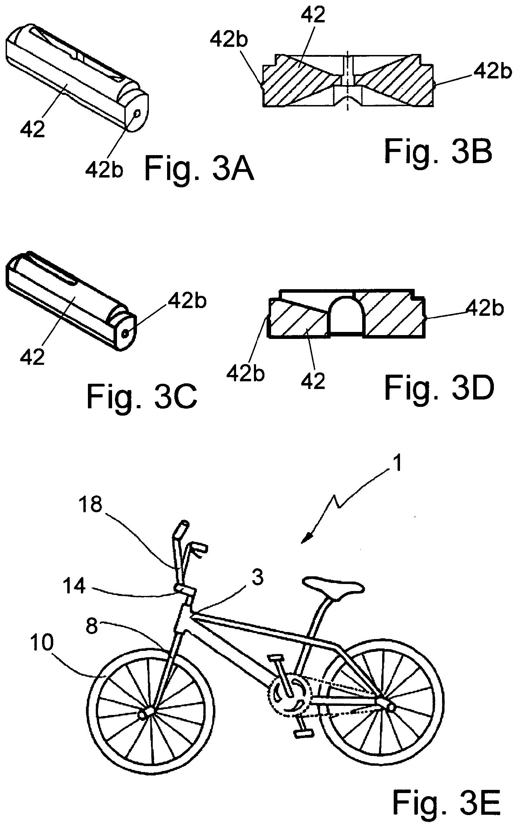

Fig. 3A eine perspektive Ansicht eines Stegs,
Fig. 3B einen Schnitt durch den Steg von Fig. 3A,
Fig. 3C eine perspektivische Ansicht eines abgewandelten Stegs,
Fig. 3D einen Schnitt durch den abgewandelten Steg von Fig. 3C,
Fig. 3E eine Seitenansicht eines erfindungsgemäßen Fahrrads,
Fig. 4A eine schematische Schnittdarstellung des Verbindungselements gemäß dem ersten Ausführungsbeispiel,
Fig. 4B eine schematische Schnittdarstellung des Verbindungselements gemäß dem zweiten Ausführungsbeispiel,
Fig. 4C eine schematische Schnittdarstellung eines abgewandelten Verbindungselements,
Fig. 4D eine perspektivische Darstellung des zweiten Übertragungselements mit einem Verbindungselement entsprechend Fig. 4C,
Fig. 4E eine Fig. 4D entsprechende Explosionsdarstellung,
Fig. 4F eine Schnittdarstellung von Fig. 4D,

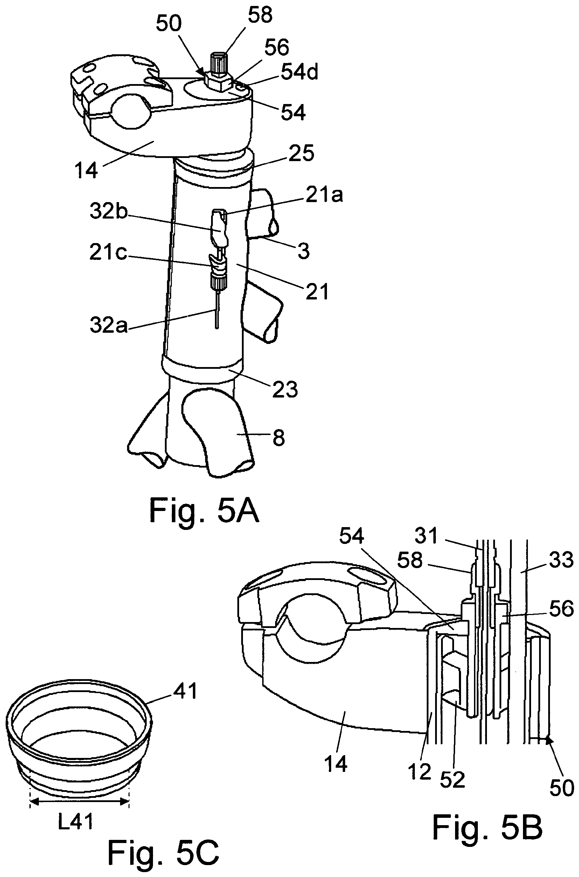

Fig. 5A eine perspektivische Ansicht im Bereich der Lagerung der Gabel samt einer Rotoreinheit,
Fig. 5B einen Schnitt durch eine Befestigungsvorrichtung von Fig. 5A,
Fig. 5C eine perspektivische Ansicht einer Lagerschale,

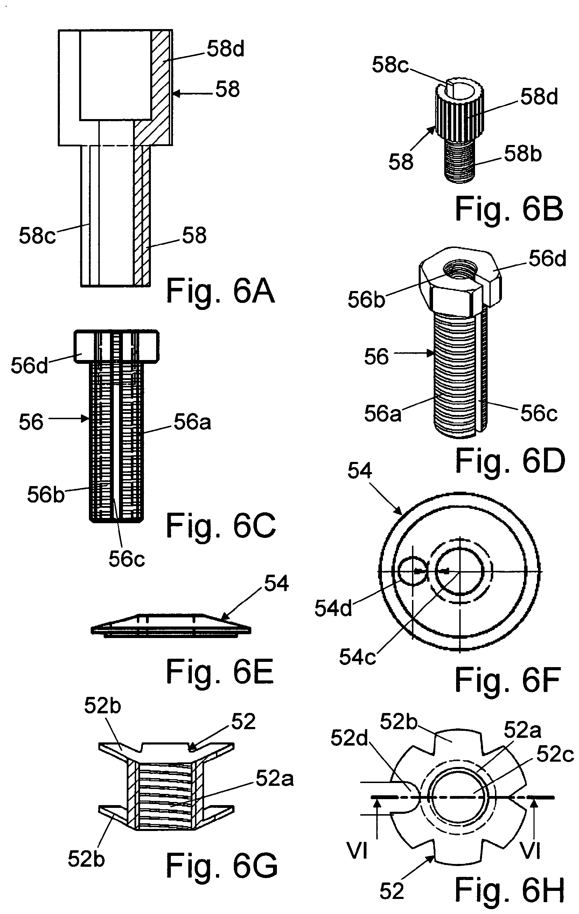

Fig. 6A einen Schnitt durch eine Einstellschraube der Befestigungsvorrichtung,
Fig. 6B eine perspektivische Ansicht der Einstellschraube von Fig. 6A,
Fig. 6C einen Schnitt durch eine Befestigungsschraube der Befestigungsvorrichtung,
Fig. 6D eine perspektivische Ansicht der Befestigungsschraube von Fig. 6C,
Fig. 6E eine Seitenansicht einer Kappe der Befestigungsvorrichtung,
Fig. 6F eine Draufsicht auf die Kappe von Fig. 6E,
Fig. 6G ein Schnitt durch eine Sternmutter der Befestigungsvorrichtung entlang der Linie VI-VI in Fig. 6H,
Fig. 6H eine Draufsicht auf die Sternmutter von Fig. 6G,
Fig. 7A eine Draufsicht auf eine abgewandelte Befestigungsvorrichtung,
Fig. 7B eine perspektivische Ansicht der Befestigungsvorrichtung von Fig. 7A,
Fig. 7C einen Schnitt im Bereich der Lagerung der Gabel samt einer Rotoreinheit gemäß einem zweiten Ausführungsbeispiel,
Fig. 8 einen Schnitt im Bereich der Lagerung der Gabel samt einer Rotoreinheit gemäß einem dritten Ausführungsbeispiel, und
Fig. 9 einen Schnitt im Bereich der Lagerung der Gabel samt einer Rotoreinheit gemäß einer Abwandlung des dritten Ausführungsbeispiels.

Ein als Ganzes mit 1 bezeichnetes Fahrrad 1, das als BMX-Freestyle-Rad ausgebildet ist, weist einen Rahmen 3 auf, der an seinem hinteren Ende das Hinterrad 5 des Fahrrades 1 lagert. Am vorderen Ende des Rahmens 3 ist eine Gabel 8 drehbar gelagert. Die Gabel 8 lagert an ihrem unteren Ende das Vorderrad 10 des Fahrrades 1. An einem das obere Ende der Gabel 8 bildenden Gabelschaft 12 ist ein Vorbau 14 fest angebracht. Der Vorbau 14 weist eine horizontal verlaufende Lenkeraufnahme 16 auf, welche den Lenker 18 des Fahrrades 1 umschließt. Der Gabelschaft 12 mit seiner kreiszylindrischen Symmetrie definiert die nachfolgend verwendeten Richtungsangaben

Zur Lagerung der Gabel 8 weist der Rahmen 3 ein zunächst beidseitig offenes, im wesentlichen kreiszylindrisches Steuerrohr 21 auf, welches im wesentlichen vertikal ausgerichtet ist. Der in axialer Richtung verlaufende Gabelschaft 12 ist über einen Teil seiner Länge innerhalb des Steuerrohrs 21 konzentrisch zu diesem angeordnet. Ein unterer Steuersatz 23 und ein oberer Steuersatz 25 sind mehrteilig aufgebaut und in sich verdrehbar, wobei sie jeweils außen am unteren bzw. oberen Ende des Steuerrohrs 21 und innen an der Gabel 8 bzw. deren Gabelschaft 12 angebracht sind.

Eine nachfolgend genauer beschriebene Rotoreinheit 30 ist innerhalb des Steuerrohres 21 zwischen dem oberen Steuersatz 23 und dem unteren Steuersatz 21 angeordnet. Die Rotoreinheit 30 ist auf dem Gabelschaft 12 in axialer Richtung gleitend verschiebbar. Ein oberer, erster Bowdenzug 31 ist von einem in der Zeichnung nur angedeuteten Bremshebel am Lenker 18 zur Rotoreinheit 30 geführt, von der wiederum ein unterer, zweiter Bowdenzug 32 am Rahmen 3 entlang zu einer in der Zeichnung nicht dargestellten Hinterradbremse am Hinterrad 5 geführt ist. Entsprechend weist der erste Bowdenzug 31 (d.h. seine Seele 31a) ein lenkerseitiges und ein rotorseitiges Ende und der zweite Bowdenzug 32 (d.h. seine Seele 32a) ein rotorseitiges und ein bremsseitiges Ende auf. Ein dritter Bowdenzug 33 ist von einem weiteren Bremshebel am Lenker 18 durch den Gabelschaft 12 hindurch zu einer in der Zeichnung nicht dargestellten Vorderradbremse am Vorderrad 10 geführt. Die Rotoreinheit 30 und weitere Bauteile zur Lagerung oder Kraftübertragung, vorzugsweise der erste Bowdenzug 31 und/oder der zweite Bowdenzug 32) und gegebenenfalls die Steuersätze 23 und 25, definieren ein Rotorsystem.

Die Rotoreinheit 30 weist ein erstes Übertragungselement 36, welches drehbar und verschiebbar auf dem Gabelschaft 12 gelagert ist, und ein zweites Übertragungselement 37 auf. Das erste Übertragungselement 36 weist für seine Lagerung auf dem Gabelschaft 12 einen - wenigstens näherungsweise - ringförmigen Bereich auf. Vorzugsweise sind die beiden Übertragungselemente 36 und 37 als Spritzgussteile aus einem belastbaren Kunststoff, aus Metall oder aus einem entsprechenden Verbundmaterial gefertigt. Die beiden Übertragungselemente 36 und 37 sind relativ zueinander drehbar gelagert und konzentrisch zum Gabelschaft 12 angeordnet. Bezüglich einer Bewegung entlang des Gabelschaftes 12 sind die beiden Übertragungselemente 36, 37 auf Mitnahme gekoppelt: Wenn das erste Übertragungselement 36 sich entlang des Gabelschaftes 12 nach oben bewegt, nimmt es das zweite Übertragungselement 37 mit. Und wenn das zweite Übertragungselement 37 sich entlang des Gabelschaftes 12 nach oben bewegt, nimmt es das erste Übertragungselement 36 mit.

Die Seele 31a des ersten Bowdenzuges 31 steht rotorseitig in Wirkverbindung mit dem ersten Übertragungselement 36, während die Seele 32a des zweiten Bowdenzuges 32 rotorseitig in Wirkverbindung mit dem zweiten Übertragungselement 37 steht. Die Hülle des zweiten Bowdenzuges 32 ist - wenigstens mittelbar - am Steuerrohr 21 abgestützt, während die Seele 32a des zweiten Bowdenzuges 32 mit ihrem rotorseitigen Ende direkt mit einem Verbindungselement 32b verbunden ist.

Beim Verbindungselement 32b handelt es sich vorliegend um ein Spritzgussteil aus Metall, es kann jedoch auch ein entsprechend belastbarer Kunststoff oder ein sonstiges Verbundmaterial verwendet werden. Ferner kann das Verbindungselement 32b auch auf andere Weise hergestellt sein, beispielsweise aus Metall gefräst oder geschmiedet. Vorzugsweise ist das Verbindungselement 32b direkt mit der Seele 32a des zweiten Bowdenzuges 32 fest verbunden, insbesondere mit dem rotorseitigen Ende der Seele 32a verpresst oder an diesem angespritzt oder angegossen oder anderweitig einstückig verbunden. Alternativ ist das Verbindungselement 32b ein separates Bauteil (d.h. nicht einstückig mit der Seele 32a), in welches die Seele 32a beispielsweise eingeclipst, eingehängt oder anderweitig formschlüssig eingeführt ist oder mit welchem die Seele 32a auf andere Weise lösbar zusammenwirkt. Beispielsweise kann in das alternative Verbindungselement 32b ein am rotorseitigen Ende der Seele 32a vorgesehener, beispielsweise tonnen-, kugel- oder kegelförmig verdickt ausgebildeter Nippel eingehängt sein, welchen das Verbindungselement 32b beispielsweise mit einem (nach oben offenen) Trichter aufnimmt, der vorzugsweise seitlich geschlitzt ist.

Das Verbindungselement 32b ist (in allen Ausführungen) direkt an einem Anbindungsbereich 37b des zweiten Übertragungselements 37 formschlüssig anbringbar, und zwar hilfsmittelfrei. Hierzu ist das Verbindungselement 32b vorzugsweise hakenförmig ausgebildet und weist einen Vorsprung 32c auf, mit welchem das Verbindungselement 32b von oben in eine axial verlaufende Führungsnut (oder einen anderen hinterschnittenen Teilbereich) des Anbindungsbereichs 37b eingreift. Wie in der Zeichnung dargestellt, kann der Vorsprung 32c quaderförmig oder alternativ schwalbenschwanzförmig ausgebildet sein und ist in eine entsprechend ausgebildete Aufnahme des Anbindungsbereichs 37b eingeführt. Durch entsprechende Wahl der Passung kann der Vorsprung 32c rein formschlüssig, ggf. durch entsprechendes Übermaß auch zusätzlich kraftschlüssig, gehalten sein. Der Anbindungsbereich 37b springt vorzugsweise radial nach außen vor, in der Art eines Erkers, damit das hakenförmige Verbindungselement 32b eingehängt werden kann, ohne Bauraum radial innerhalb des zweiten Übertragungselementes 37 zu benötigen. Der Anbindungsbereich 37b kann alternativ als einfache Nut (ohne Erker) ausgebildet sein. In beidne Fällen ist der Anbindungsbereich 37b aber noch (vollständig) innerhalb des Steuerrohres 21 angeordnet. Aufgrund der beständigen Zugbelastung der Seele 32a, welche durch eine nicht dargestellte Feder der Hinterradbremse gegeben ist, kann ein Lösen der Verbindung bei Betrieb sicher vermieden werden. Im Falle einer Reparatur ist jedoch ein sehr einfaches, werkzeugfreies Lösen der Verbindung möglich.

Das Verbindungselement 32b kann in verschiedenen Varianten ausgebildet sein. So kann das Einhängen am Anbindungsbereich 37b weitergebildet sein zu einem Einclipsen, indem außer dem Vorsprung 32c ein weiterer Vorsprung 32d vorgesehen ist, welcher noppenartig am unteren Ende des Verbindungselements 32b ausgebildet ist und radial nach innen vorspringt. Dieser weitere Vorsprung 32d dringt in eine entsprechende Vertiefung des Anbindungsbereichs 37b ein, d.h. nach einer elastischen Verformung des Verbindungselements 32b umgreift dieses den Anbindungsbereich 37b (wenigstens teilweise formschlüssig), d.h. das Verbindungselement 32b ist clipsartig am zweiten Übertragungselement 37 gesichert. In der Zeichnung sind beide Vorsprünge 32c und 32d des als Clips wirkenden Verbindungselements 32b noppenartig ausgebildet, sie können jedoch eine beliebige geeignete Gestalt haben, welche ein sicheres Eingreifen und Halten bei einer Zugbelastung der Seele 32a ermöglichen.

Mittels des Rotorsystems wird eine Bremsbetätigung (d.h. eine Betätigung des Bremshebels für die Hinterradbremse) vom Lenker 18 zum Hinterrad 5 übertragen. Die Rotoreinheit 30 (mit ihren beiden relativ zueinander drehbaren Übertragungselementen 36 und 37) dient dabei der Kraftübertragung vom ersten Bowdenzug 31 auf den zweiten Bowdenzug 32.

Will der Benutzer des Fahrrades 1 eine Lenkbewegung ausführen, so dreht er über den Lenker 18 die Gabel 8 und damit das Vorderrad 10. Bei dieser Drehbewegung werden der Gabelschaft 12 und das erste Übertragungselement 36 mitgenommen. Das zweite Übertragungselement 37 bleibt zusammen mit dem zweiten Bowdenzug 32 in der Position, die es relativ zum rahmenfesten Steuerrohr 21 eingenommen hat. Eine Verschiebung der Rotoreinheit 41 entlang des Gabelschaftes 12 findet nicht oder nur unmerklich statt.

Will der Benutzer des Fahrrades 1 eine Bremsung mit der Hinterradbremse vornehmen, so zieht er über den Bremshebel an der Seele 31a des ersten Bowdenzuges 31 und damit am ersten Übertragungselement 36. Dadurch wird die Rotoreinheit 41 entlang des Gabelschaftes 12 nach oben bewegt, so dass auch das zweite Übertragungselement 37 nach oben gezogen wird. Das zweite Übertragungselement 37 wiederum zieht an der Seele 32a des zweiten Bowdenzuges 32, wodurch die Hinterradbremse betätigt wird. Eine Bremsung mit der Vorderradbremse erfolgt direkt mittels des dritten Bowdenzuges 33.

Insoweit gleichen sich die Ausführungsbeispiele. Unterschied bestehen hinsichtlich der Lagerung der Übertragungselemente 36 und 37 und der Zufuhr der Bodenzüge 31 und 32. Gleiche und gleichwirkende Bauteile tragen die gleichen Bezugszeichen.

Im ersten Ausführungsbeispiel ist die Grundform beider Übertragungselemente 36 und 37 ein Zylinderring (Hülse). Das erste Übertragungselement 36 ist direkt auf dem Gabelschaft 12 gleitend gelagert, vorzugsweise mit geringem Spiel. Die bevorzugte Ausbildung aus Kunststoff macht eine gleitfähige Beschichtung entbehrlich. Das zweite Übertragungselement 37 ist auf dem ersten Übertragungselement 36 gelagert. Hierzu weist das erste Übertragungselement 36 eine radial nach innen springende erste Stufe 36a auf, auf welcher das zweite Übertragungselement 37 mittels einer dazu passenden zweite Stufe 37a sitzt. Die beiden Übertragungselement 36, 37 sind somit einerseits axial miteinander fluchtend (aufgrund der radial verlaufenden Bereiche der Stufen) als auch zugleich andererseits radial ineinander liegend, d.h. konzentrisch zueinander (aufgrund der axial verlaufenden Bereiche der Stufen), angeordnet. Vom Gabelschaft 12 ist das zweite Übertragungselement 37 radial beabstandet, d.h. der Innendurchmesser des zweiten Übertragungselementes 37 ist größer als der Innendurchmesser des ersten Übertragungselementes 36. In axialer Richtung werden die beiden Übertragungselemente 36 und 37 durch die Vorspannung in den Bowdenzügen, insbesondere der Hinterradbremse, zusammengehalten.

Die Abmessungen der Rotoreinheit 30 sind so gewählt, dass ihre axiale Länge größer ist als ihr Durchmesser. Die beiden Steuersätze 23 und 25 weisen jeweils als dasjenige Teil (von in der Regel drei Teilen), das mit dem Steuerrohr 21 zu verbinden ist, eine Lagerschale 41 auf. Die trichterförmige Lagerschale 41 nimmt mit einem breiten Ende ein Kugellager auf, während sie mit dem anderen, verjüngten Ende in das Steuerrohr 21 eingepresst (oder anderweitig fest verbunden) ist. Der Innendurchmesser L41 des verjüngten Endes der Lagerschale 41, also der Innendurchmesser an der engsten Stelle der Lagerschale 41, beträgt L41 = 36,0 ± 0,2 mm, was etwas größer ist als bei bekannten Lagerschalen. Dadurch kann die Rotoreinheit 30 in das Steuerrohr 21 eingeführt (oder gegebenenfalls entnommen) werden, auch wenn die Lagerschalen 41 der Steuersätze 23 und 25 bereits im Steuerrohr 21 sitzen. Der Außendurchmesser des breiten Endes der Lagerschale 41, also der Außendurchmesser an der breitesten Stelle, beträgt 45,0 mm, was demjenigen von bekannten Lagerschalen entspricht. Die Wandstärke der Lagerschale 41 beträgt in der Regel 1,5 mm. Es können auch Steuerrohre 21 mit integrierten Lagerschalen 41 verwendet werden. Der Innendurchmesser eines derartigen Steuerrohres 21 beträgt vorzugsweise 36,5 ± 0,2 mm.

Zur Verbindung des ersten Übertragungselements 36 mit dem ersten Bowdenzug 31 ist ein Steg 42 vorgesehen, eine längliche Form, ähnlich einem Bolzen, und einen möglichst eindeutigen (d.h. nicht kreisrunden) Querschnitt aufweist. Vorliegend entspricht der Querschnitt einem Rechteck mit stark ausgerundeten Ecken. Am erste Übertragungselement 36 sind auf der radial nach innen weisenden Seite zwei Nuten 36b ausgebildet, welches sich radial gegenüberliegen, sich über einen Teil der axialen Länge des zweiten Übertragungselementes 36 erstrecken und von unten zugänglich sind. Das zweite Übertragungselement 36 kann mit diesen Nuten 36b den Steg 42 aufnehmen, welcher sich dann in radialer Richtung erstreckt. Anstelle der Nuten 36b können andere Öffnungen/Aufnahmen vorgesehen sein, beispielsweise Bohrungen. Vorzugsweise weist der Steg 42 an seinen beiden Enden jeweils eine Rastnase 42a auf, welche sich beim Einführen des Stegs 42 in das erste Übertragungselement 36 in den Grund der Nuten 36b eingraben ("einrasten"), so dass das erste Übertragungselement 36 und der eingerastete Steg 42 miteinander verbunden sind. Vorzugsweise weist jede Nut 36b eine kleine Mulde auf, welche die zugeordnete Rastnase 42a aufnimmt, um das Einrasten zu verbessern. Der Steg 42 kann auf seiner Oberseite an beiden Enden eine Stufe aufweisen, so dass er am Ende der Nuten 36b anschlägt und etwas in den nutfreien Bereich des ersten Übertragungselementes 31 ragt.

Der Steg 42 durchdringt den Gabelschaft 12 an zwei einander radial gegenüberliegenden Gabelschaft-Öffnungen 12a, d.h. seine Länge ist größer als der Außendurchmesser des Gabelschaftes 12, und er steht in radialer Richtung über den Außenumfang des Gabelschafts 12 über. Die Gabelschaft-Öffnungen 12a sind als Langlöcher ausgebildet, damit der Steg 42 samt erstem Übertragungselement 36 einerseits eine definierte Lage in Umfangsrichtung einnimmt und einer Lenkbewegung der Gabel 8 folgt und andererseits eine Bewegung der Rotoreinheit 30 entlang des Gabelschaftes 12 bei einer Bremsung nicht behindert.

Der Steg 42 ist auf der Seele 31a des ersten Bowdenzuges 31 zwischen deren Ende und der Hülle des ersten Bowdenzuges 31 gelagert. Hierzu weist der Steg 42 mittig einen Kanal zum Durchtritt der Seele 31a des ersten Bowdenzuges 31 und auf der Unterseite eine Vertiefung zur - vorzugsweise formschlüssigen - Aufnahme eines Nippels 31b am Ende der Seele 31a (oder eines anderweitig verdickten Endes der Seele 31a) des ersten Bowdenzuges 31 auf. Auf diesem Nippel 31b sitzt der Steg 42 im montierten Zustand. Wenngleich der Steg 42 und die Seele 31a des ersten Bowdenzuges 31 im montierten Zustand rechtwinklig zueinander ausgerichtet sind, so ist der Steg 42 vorzugsweise doch - zur Erleichterung der Montage - relativ zur Seele 31a kippbar ist. Hierzu weist der Steg 42 Schrägen auf, die auf den Kanal ausgerichtet sind und die bei der Montage ein Kippen des Steges 42 relativ zur Seele 31a des ersten Bowdenzuges 31 erlauben. Diese Schrägen können symmetrisch oder einseitig und auf der Oberseite und/oder auf der Unterseite des Steges 42 ausgebildet sein. Die Zeichnung zeigt solche Alternativen.

Der Innendurchmesser des Steuerrohres 21 ist etwas größer als der Außendurchmesser der Übertragungselemente 36 und 37, so dass im Steuerrohr 21 eine Steuerrohr-Öffnung 21a vorgesehen ist, durch welche das Verbindungselement 32b ragt. Genauer gesagt, ist der zweite Bodenzug 32 auf der Außenseite des Steuerrohres 21 bis zur Steuerrohr-Öffnung 21a geführt, wo das Verbindungselement 32b hindurchragt und mit dem zweiten Übertragungselement 37 im Inneren des Steuerrohres 21 verbunden ist.

Die Steuerrohr-Öffnung 21a ist als Langloch ausgebildet, damit das Verbindungselement 32b samt zweitem Übertragungselement 37 einerseits eine definierte Lage in Umfangsrichtung einnimmt und bei einer Lenkbewegung der Gabel 8 ortsfest bleibt und andererseits eine Bewegung der Rotoreinheit 30 entlang des Gabelschaftes 12 bei einer Bremsung nicht behindert.

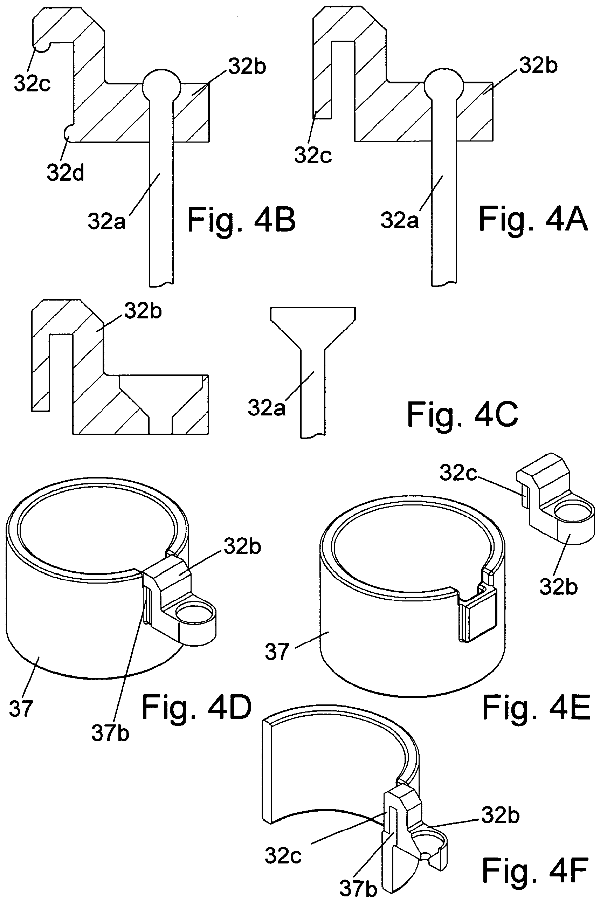

Die Hülle des zweiten Bowdenzuges 32 ist vorzugsweise im Bereich der Steuerrohr-Öffnung 21a am Steuerrohr 21 abgestützt. Zur Abstützung kann an der Außenfläche des Steuerrohrs 21 ein entsprechender Anschlag 21c angebracht sein, beispielsweise mittels Anschraubens, wie beispielsweise in Fig. 4A der WO 2012/005610 A2 offenbart, oder mittels Anschweißens. Dieser Anschlag 21c kann so positioniert sein, dass er in der untersten Stellung des Verbindungselements 32b gleichzeitig auch einen Anschlag für das Verbindungselement 32b bildet. Alternativ kann die Seele 32a des zweiten Bowdenzuges 32 auch umgelenkt sein, so dass der Anschlag beispielsweise auch innerhalb eines Rohres (des Rahmens 3) vorgesehen sein kann, innerhalb dessen der zweite Bowdenzug32 verläuft. Gegebenenfalls kann auch die Rohreinführung, durch welche die Seele 32a in das Rohr, welches zur Rotoreinheit 30 führt, selbst den Anschlag bilden, d.h. die Seele 32a läuft über eine relativ lange Strecke frei innerhalb des entsprechenden (Rahmen-)Rohres. Bei entsprechender Vorspannung in allen Betriebszuständen kann der Anschlag auch entsprechend dem Verbindungselement am Gehäuse, bspw. am Steuerrohr 21, oder Rahmen 3 des Fahrrades 1 angebracht sein, d.h. insbesondere formschlüssig hieran angebracht und nicht angeschraubt sein.

Zur Befestigung des Vorbaus 14 am Gabelschaft 12 ist eine Befestigungsvorrichtung 50 vorgesehen. Der Vorbau 14 ist dabei auf den Gabelschaft 12 geschoben bis er - gegebenenfalls unter Zwischenlage eines Ringes - auf dem oberen Steuersatz 23 sitzt. Die mehrteilig ausgebildete Befestigungsvorrichtung 50 weist als ein Teil eine Sternmutter 52 auf, welche am oberen Ende des Gabelschaftes 12 in dessen Inneren angeordnet ist. Die Sternmutter 52 weist einen hohlzylindrischen Grundkörper mit einem Sternmutter-Innengewinde 52a und (vorliegend jeweils sechs) radial abstehenden Sternmutter-Armen 52b an den beiden Enden (oben und unten) auf. Die Sternmutter 52 wird in den Gabelschaft 12 eingeschlagen, so dass sie fest mit diesem verbunden ist. Das zum Gabelschaft 12 konzentrischen Sternmutter-Innengewinde 52a definiert einen zentrischen Sternmutter-Durchlass 52c. Im Unterschied zu bekannten Sternmuttern weist die vorliegende Sternmutter 52 oben und unten zwischen zwei benachbarten Armen 52b einen exzentrischen Sternmutter-Durchlass 52d auf.

Als weiterer Teil der Befestigungsvorrichtung 50 ist eine Kappe 54 vorgesehen, welche tellerförmig ausgebildet ist und oben auf den Vorbau 14 gesetzt ist. Dabei fluchtet eine mittig angeordnete, zentrische Kappen-Öffnung 54c der Kappe 54 mit dem zentrischen Sternmutter-Durchlass 52c, während eine exzentrische Kappen-Öffnung 52d mit dem exzentrischen Sternmutter-Durchlass 52d fluchtet.

Eine Befestigungsschraube 56 als dritter Teil der Befestigungsvorrichtung 50 weist ein Befestigungsschrauben-Außengewinde 56a, ein Befestigungsschrauben-Innengewinde 56b, einen Befestigungsschrauben-Längsschlitz 56c und am oberen Ende einen - vorliegend als Mehrkant ausgebildeten - Befestigungsschrauben-Kopf 56d auf. Die hohle Befestigungsschraube 56 ist durch die Kappe 54 an der Kappen-Öffnung 54c hindurch in die Sternmutter 52 eingeschraubt, d.h. mit dem Befestigungsschrauben-Außengewinde 56a in das Sternmutter-Innengewinde 52a. Dadurch spannt die Befestigungsschraube 56 den Vorbau 14 gegen den oberen Steuersatz 23.

Als vierter Teil der Befestigungsvorrichtung 50 ist eine Einstellschraube 58 vorgesehen. Die hohle Einstellschraube 58 weist ein Einstellschrauben-Außengewinde 58b, einen Einstellschrauben-Längsschlitz 58c und einen - vorliegend geriffelten - Einstellschrauben-Kopf 58d auf. Die Einstellschraube 58 ist in die Befestigungsschraube 56 eingeschraubt, d.h. mit dem Einstellschrauben-Außengewinde 58b in das Befestigungsschrauben-Innengewinde 56b. Einstellschraube 58, Befestigungsschraube 56 und Sternmutter 52 sind also konzentrisch zueinander und zum Gabelschaft 12 angeordnet.

Der erste Bowdenzug 31 ist vom Lenker 18 her zur Befestigungsvorrichtung 50 geführt, wo seine Hülle an der Einstellschraube 58 abgestützt ist, während seine Seele 31a durch die hohle Einstellschraube 58 - und damit auch durch die hohle Befestigungsschraube 56, die zentrische Kappen-Öffnung 54c und den zentrischen Sternmutter-Durchlass 52c hindurch - in den Gabelschaft 12 geführt ist bis zum Steg 42. Die Relativstellung von Einstellschraube 58 und Befestigungsschraube 56 erzeugt eine Spannung im ersten Bowdenzug 31. Damit die Seele 31a auch mit Nippeln an beiden Enden in die hohlen Schrauben 56 und 58 eingeführt werden kann, sind der Einstellschrauben-Längsschlitze 58c und der Befestigungsschrauben-Schlitz 56c vorgesehen, durch welche die Seele 31a des ersten Bowdenzuges 31 seitlich in die Schrauben 58 und 56 eingeführt werden kann. Sinnvollerweise wird darauf geachtet, dass bei montierter Befestigungsvorrichtung 50 die Längsschlitz 56c und 58c nicht deckungsgleich sind, um ein übermäßiges seitliches Ausknicken der Seele 31a zu verhindern.

Der dritte Bowdenzug 33, welcher bei bekannten Befestigungsvorrichtungen anstelle des ersten Bowdenzuges 31 zentrisch durchgeführt ist, ist bei der vorliegenden Befestigungsvorrichtung exzentrisch durchgeführt. D.h., der dritte Bowdenzug 33 ist durch die exzentrische Kappen-Öffnung 54d und den exzentrischen Sternmutter-Durchlass 52d in den Gabelschaft 12 geführt, bis hin zur Vorderradbremse.

Eine abgewandelte Befestigungsvorrichtung 50 besteht aus der Einstellschraube 58 und aus einer abgewandelten Befestigungsschraube 56'. Die abgewandelte Befestigungsschraube 56' weist einen größeren Durchmesser auf und wird mittels ihres Außengewindes direkt in den Gabelschaft geschraubt, in welchen hierfür ein Innengewinde geschnitten wurde. Die abgewandelte Befestigungsschraube 56' weist ein Befestigungsschrauben-Innengewinde 56b auf, in welches die hohle Einstellschraube 58 eingeschraubt ist. Die Durchführung der Seele 31a des ersten Bowdenzuges 31 erfolgt wie zuvor beschrieben. Der dritte Bowdenzug 33 wird durch einen exzentrischen Durchlass (vorliegend mit einem nierenförmigen Querschnitt) in den Gabelschaft 12 geführt.

Für die Montage der Gabel 8 wird in einem ersten Schritt die Sternmutter 52 in den Gabelschaft 12 eingeschlagen. In einem zweiten Schritt wird der erste Bowdenzug 31 (samt Steg 42) von unten her durch den Gabelschaft 12 und die Sternmutter 42 nach oben geschoben, wobei der Steg 42 relativ zur Seele 31a des ersten Bowdenzuges 31 gekippt wird, wenn er in den Gabelschaft 12 gelangt. In einem dritten Schritt wird (bei gleichzeitigem Zurückkippen relativ zur Seele 31a) der Steg 42 mit seinen Enden durch die Gabelschaft-Öffnungen 12a gesteckt, womit der Steg 42 in der richtigen Position ist. In einem vierten Schritt wird die Rotoreinheit 30 von oben her auf den Gabelschaft 12 geschoben, bis der Steg 42 im ersten Übertragungselement 36 einrastet. Die so erhaltene, vormontierte Baugruppe wird dann bei der Montage des gesamten Fahrrades 1 in einem fünften Schritt in das Steuerrohr 21 geschoben. In einem sechsten Schritt wird der Vorbau 14 aufgesetzt und die Befestigungsvorrichtung 50 vervollständigt, d.h. durch Anziehen der Befestigungsschraube 56 wird die Gabel 8 fixiert (geklemmt). In einem siebten Schritt wird dann der zweite Bowdenzug 32 mit dem Verbindungselement 32b am Anbindungsbereich des zweiten Übertragungselements 37 befestigt, wofür das Verbindungselement 32b durch die Steuerrohr-Öffnung 21 gesteckt und auf die oben beschriebene Weise eingehängt (und/oder eingeclipst) wird.

Die erfindungsgemäße Befestigungsvorrichtung 50 ist insbesondere für Gabeln 8, deren Gabelschaft 12 mit einem Durchmesser von 1 1/8" (28,6 mm) endet. Es sind aber auch Gabeln bekannt, deren Gabelschaft mit einem Durchmesser von 1" (25,4 mm) endet und dabei außen ein Gewinde tragen kann. Die hierfür bekannte Befestigungsvorrichtung, welche auch vorliegend alternativ zur Befestigungsvorrichtung 50 verwendet werden könnte, besteht aus einem Schaftvorbau, welcher an seinem oberen Ende verdickt ist, so dass der Vorbau 14 auf den Schaftvorbau (d.h. auf dessen oberes Ende) gepresst oder geklemmt werden kann. An seinem unteren Ende ist der Schaftvorbau schräg geschnitten (als Zylinderschnitt). Der Schaftvorbau wird seiner Länge nach von einer Stellschraube durchdrungen, welche zentral in axialer Richtung verlaufend angeordnet und von oben zugänglich ist. Mittels dieser Stellschraube sind die beiden Abschnitte des Schaftvorbau relativ zueinander verschiebbar, und zwar entlang der schrägen Schnittfläche. In den Gabelschaft 12 eingeführt, können sich die beiden Abschnitte des Schaftvorbaus an der Innenwand des Gabelschaftes 12 abstützen und gegeneinander verspannt werden. Der Vorbau 14 ist dadurch am Gabelschaft 12 befestigt. Das optional vorhandene Gewinde außen auf dem Gabelschaft 12 dient dazu, mittels einer Überwurfmutter den oberen Steuersatz 25 in axialer Richtung zu beaufschlagen und dessen Bestandteile zusammen zu halten. Um den dritten Bowdenzug 33 auch in den Gabelschaft 12 einführen zu können, weist der Schaftvorbau vorzugsweise eine zusätzliche Öffnung auf, beispielsweise neben dem Kopf der Stellschraube.

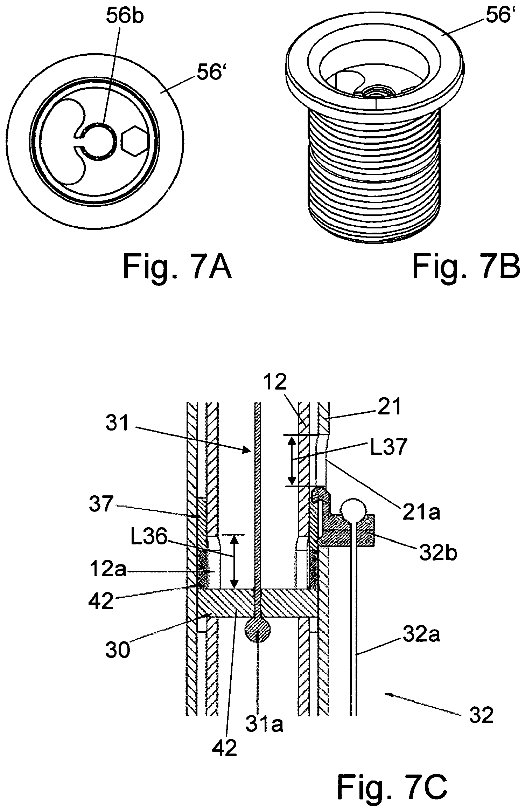

Das zweite Ausführungsbeispiel (Fig. 7C) stimmt mit dem ersten Ausführungsbeispiel überein, soweit nicht nachfolgend abweichend beschrieben. Auch hier verläuft die Seele 31a des ersten Bowdenzuges 31 im Inneren des Gabelschafts 12, wobei die Einführung in den Gabelschaft 12 im Prinzip an beliebiger Stelle, beispielsweise über den Vorbau oder direkt von den Bremsgriffen am Lenker, erfolgen kann, vorzugsweise am mit der oben beschriebenen Befestigungsvorrichtung 50 (oder der alternativen, bekannten Befestigungsvorrichtung) erfolgt. Am Ende der Seele 31a ist vorliegend ein Steg 42 aus Kunststoff einstückig angespritzt. Vorliegend erfolgt die Herstellung des entsprechenden Bowdenzuges derart, dass die Seele in die Hülle eingeführt wird, anschließend an einem Ende der Steg 42 und am anderen Ende ein Nippel (nicht dargestellt) für den Bremshebel angespritzt werden, so dass die Seele 31a nicht mehr aus der Hülle ohne Zerstörung des Stegs 42 bzw. des Nippels entfernt werden kann, was große Vorteile in Hinblick auf die Fertigung hat. Steg 42 und Seele 31a können jedoch auch - wie im ersten Ausführungsbeispiel - separat ausgebildet sein, d.h. die Seele 31a kann beispielsweise in eine im Steg 42 vorgesehene Öffnung eingeführt und hiermit verklemmt sein.

Das hülsenförmig ausgebildete erste Übertragungselement 36 sitzt in axialer Richtung verschiebbar auf dem Gabelschaft 12 sitzt. Die Enden des Stegs 42 ragen durch langlochförmige Gabelschaft-Öffnungen 12a in radialer Richtung etwas über den Außenumfang des Gabelschafts 12 hinaus und sind in nach vorliegend unten offenen Schlitzen des ersten Übertragungselementes 36 aufgenommen. Zwei nach unten offene Schlitze erleichtern die Montage. Im Prinzip sind jedoch auch ein Schlitz oder Langloch in Verbindung mit einer der Gestalt des Steges 42 angepassten Öffnung auf der gegenüberliegenden Seite oder zwei der Gestalt des Steges 42 angepasste Öffnungen möglich. Wenn der Steg 42 am unteren Ende der Gabelschaft-Öffnung 12a sitzt, hat der freie Bereich oberhalb der Oberseite des Stegs 42 und dem oberen Ende der Gabelschaft-Öffnung 12a eine Länge L36.

Mit dem ersten Übertragungselement 36 wirkt das zweite Übertragungselement 37 zusammen, welches vorliegend durch einen direkt auf dem Gabelschaft 12 oberhalb des ersten Übertragungselements 36 sitzenden, verschiebbaren Ring mit dem Anbindungsbereich 37b gebildet ist. Der Anbindungsbereich 37b und das Verbindungselement 32b sind wie oben beschrieben ausgebildet.

Das Verbindungselement 32b ragt vorliegend durch eine Steuerrohr-Öffnung 21a nach außerhalb des Steuerrohres 21, d.h. die Seele 32a des zweiten Bowdenzuges 32a verläuft vorliegend auch außerhalb des Steuerrohres 21. Die Steuerrohr-Öffnung 21a ist vorliegend langlochförmig ausgebildet, wobei im unbetätigten Zustand der Bowdenzüge 31, 32 der Abstand zwischen der Oberseite des Verbindungselements 32b innerhalb der Steuerrohr-Öffnung 21a und dem oberen Ende der Steuerrohr-Öffnung 21a, also der freie Bereich in der Steuerrohr-Öffnung 21a, mit L37 bezeichnet ist. Im Verhältnis zur zuvor genannten Länge L36 gilt, dass vorliegend L37 maximal gleich groß ist (vorzugsweise etwas größer als L36 ist), das heißt, die Gabelschaft-Öffnung 12a dient als Sicherheitsbegrenzung für die maximale Verschiebung der Übertragungselemente 36, 37, so dass das Verbindungselement 32a nicht durch Kräfte von oben beschädigt wird. Andererseits kann bei einer Festlegung von L44 gleich L55 zusätzlich sichergestellt werden, dass - im Falle einer Ausgestaltung des Verbindungselements 32b mit einem in eine Aufnahme des Anbindungsbereichs 37b einzuführenden Vorsprung 32c - das Verbindungselement 32b vollständig eingeführt ist. Die unterschiedlichen oder gleichen Längen L44 und L55 können auch beim ersten Ausführungsbeipiel in gleicher Weise und mit gleicher Funktion verwirklicht sein. Die Abstützung der Hülle des zweiten Bowdenzuges 32 erfolgt wie im ersten Ausführungsbeispiel.

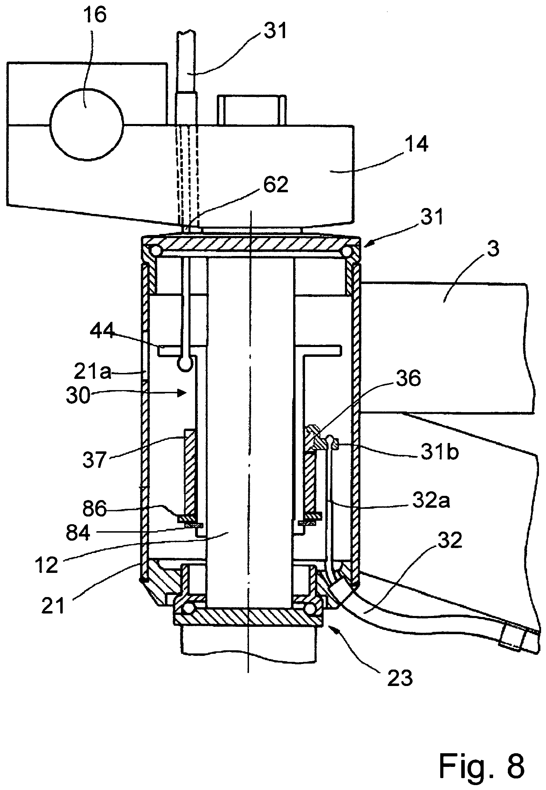

Im dritten Ausführungsbeispiel (Fig. 8) sind die Rotoreinheit 30 und der erste Bowdenzug 31 vollständig außerhalb des Gabelschaftes 12 angeordnet, ähnlich wie es bereits in der DE 199 29 093 C2 offenbart ist.

Das erste Übertragungselement 36 besteht im wesentlichen aus einer Hülse, die mit geringem Spiel den Gabelschaft 12 umschließt, und an deren oberes Ende einstückig mit einem ringförmigen, sich nach außen erstreckenden Flansch ausgebildet ist. Über eine Gleitlagerung ist das den Gabelschaft 12 umschließende erste Übertragungselement 36 leichtgängig auf dem Gabelschaft 12, welcher vorliegend aus poliertem Stahl besteht, gelagert. Das erste Übertragungselement 36 ist vorliegend aus Kunststoff spritzgegossen. Am unteren Ende der Hülse ist eine Nut ausgebildet, in welcher ein Halteelement 84 in Gestalt eines Sprengrings aufgenommen ist. Oberhalb des Halteelements 84 ist eine Unterlegscheibe 86 positioniert.

Zwischen dem Flansch des ersten Übertragungselements 36 und der Unterlegscheibe 86 ist auf der Hülse das zweite Übertragungselement 37 angeordnet. Das zweite Übertragungselement 37 besteht im wesentlichen aus einem Ring angeordnet, welcher ebenfalls aus Kunststoff spritzgegossen ist. Die Hülse weist in diesem Bereich eine durchgehend zylinderförmige, glatte Außenfläche auf, so dass der Ring relativ zur Hülse leicht drehbar ist. Das zweite Übertragungselement 37 weist an seinem oberen Rand vorliegend auf einer Seite den Anbindungsbereich 37b auf. In axialer Richtung ist das zweite Übertragungselement 55 zusammen mit den anderen Teilen der Rotoreinheit 30 verschiebbar auf dem Gabelschaft 12 angeordnet, relativ zum ersten Übertragungselement 36 aber aufgrund entsprechender Vorspannung der Bowdenzüge 31, 32 unverschiebbar. Für die beiden Übertragungselemente 36, 37 bildet das Steuerrohr 21 ein Gehäuse, welches in radialer Richtung (bezüglich der Drehung der beiden Übertragungselemente 36, 37) Schutz bietet. Wie aus der Zeichnung ersichtlich, bildet das Steuerrohr 21 einen Teil des Rahmens 3.

Beim ersten Bowdenzug 31 ist die Hülle über eine Gewindeverbindung am Vorbau 14 auf dessen Oberseite befestigt, während die Seele 31a des ersten Bowdenzuges 31 durch eine vertikale Bohrung des Vorbaus 14 auf dessen Unterseite geführt ist. Durch eine Öffnung im oberen Steuersatz 25 hindurch ist die Seele 31a in das Innere des Steuerrohrs 21 geführt und mit dem Flansch des ersten Übertragungselementes 36 verbunden, vorliegend direkt in einen Schlitz im Flansch eingehängt. Der Flansch entspricht in seiner Übertragungsfunktion dem oben beschriebenen Steg 42. Der Verbindungsbereich ist vorzugsweise durch eine beispielsweise ovale Steuerrohr-Öffnung 21a im Steuerrohr 21 von außen zugänglich. Die Steuerrohr-Öffnung 21a wird vorzugsweise durch eine nicht dargestellte Kappe abgedeckt. Die Steuerrohr-Öffnung 21a kann auch anders ausgebildet sein, ferner muss sie nicht notwendigerweise vorn am Steuerohr 21 angeordnet sein, sondern beispielsweise auch seitlich.

Der zweite Bowdenzug 32 ist mit seiner Hülle am Steuerrohr 21 oder vorliegend an einem Adapterstück zwischen unterem Steuersatz 23 und Steuerrohr 21 abgestützt, während die Seele 32a des zweiten Bodenzuges 32 durch eine Öffnung im unteren Steuersatz 23 oder in besagtem Adapterstück in das Innere des Steuerrohrs 21 geführt. Wie oben beschrieben, ist die Seele 32a des zweiten Bowdenzuges mittels eines Verbindungselementes 32b mit einem Anbindungsbereich 37b des zweiten Übertragungselements 37 verbunden. Für eine einfache Montage des Verbindungelements 32b und der Seele 32a des zweiten Bowdenzuges 32 kann die Steuerrohr-Öffnung 21a deutlich größer ausgebildet sein und sich auf einer Seite seitlich über das Steuerrohr 21 erstrecken. Es kann jedoch auch eine zweite Öffnung an geeigneter Stelle vorgesehen sein.

Der dritte Bowdenzug 33 für die Vorderradbremse ist durch einen nicht in der Zeichnung dargestellten Kanal im hohl ausgebildeten Gabelschaft 12 gezogen. Sofern mit nur einem Bremshebel die Hinterradbremse und die Vorderradbremse gleichzeitig betätigt werden sollen, kann an der Rotoreinheit 30 auf entsprechende Weise (d.h. mittels eines weiteren Verbindungselementes und eines Anbindungsbereichs) die Seele des dritten Bowdenzuges 33 befestigt sein, welche dann durch den unteren Steuersatz 23 hindurch zur Vorderradbremse geführt sein kann. Die Befestigungen der beiden zweiten Seelen erfolgen in diesem Fall bevorzugt um 180° versetzt zueinander. Ebenfalls ist es natürlich möglich, auf beiden Seiten des Lenkers Bremshebel vorzusehen, wobei die Funktion der Bremsen identisch ist. In diesem Fall sind am Flansch des ersten Übertragungselements 36 zwei Seelen angebracht.

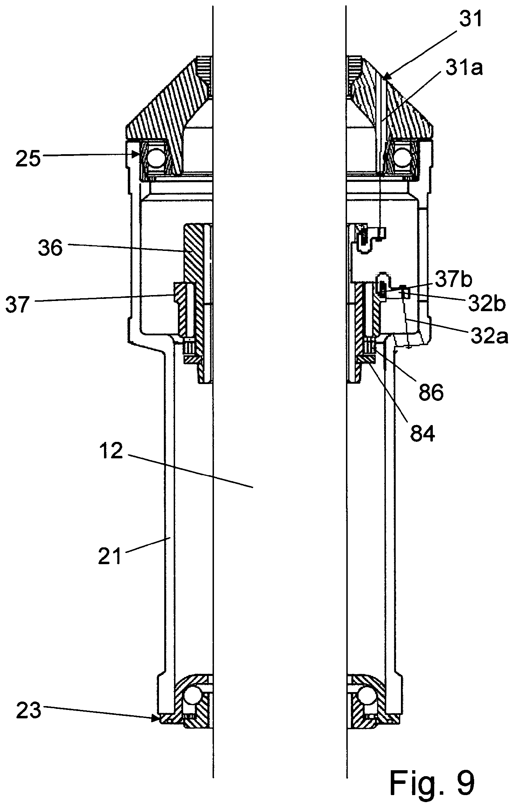

Gemäß einer Abwandlung (Fig. 9) des dritten Ausführungsbeispiels ist auch die Seele 31a des ersten Bowdenzuges 31 mittels eines Verbindungselements, welches beispielsweise entsprechend dem Verbindungselement 32b oder seinen Varianten ausgebildet ist, und einen Anbindungsbereich, welcher geeignet ausgebildet ist und mit welchem das Verbindungselement verbunden ist, mit dem ersten Übertragungselement 36 verbunden. Hierbei weist das erste Übertragungselement 36 an seinem oberen Rand besagten Anbindungsbereich auf. Aufgrund der Vorspannung der Seele 31a des ersten Bowdenzuges 31 wird sowohl das Seelenende im Verbindungselement (im Falle einer getrennten Ausbildung) als auch das Verbindungselement im Anbindungsbereich entgegen der Schwerkraft in Eingriff gehalten.

Vorsorglich sei darauf hingewiesen, dass - beispielsweise für die Durchführung zweier unterschiedlicher Bowdenzüge für Hinterradbremse und Gangschaltung - auch eine Kombination zweier der zuvor beschriebenen Rotoreinheiten (oder eine Kombination mit einer außerhalb des Steuerrohres 21 angeordneten Rotoreinheit) möglich ist., die axial übereinander angeordnet sind. Bevorzugt ist dabei die Kombination der Rotoreinheit 30 des dritten Ausführungsbeispiels oder seiner Abwandlung, welche dann im Steuerrohr 21 oben angeordnet ist, mit einer Rotoreinheit 30 des ersten oder zweiten Ausführungsbeispiels, welche dann im Steuerrohr 21 unten angeordnet ist. Da der erste Bowdenzug 31 zur unteren Rotoreinheit 30 innerhalb des Gabelschaftes 12 und derjenige zur oberen Rotoreinheit 30 außerhalb des Gabelschaftes 12 zugeführt ist, und die beiden zweiten Bowdenzüge 32 an unterschiedlichen Stellen des Steuerrohrs 21 angeordnet sein können, behindern sich die beiden Rotoreinheiten 30 bei einer Drehbewegung der Gabel 8 nicht.

### Bezugszeichenliste

1 Fahrrad
3 Rahmen
5 Hinterrad
8 Gabel
10 Vorderrad
12 Gabelschaft
12a Gabelschaft-Öffnung
14 Vorbau
16 Lenkeraufnahme
18 Lenker
21 Steuerrohr
21a Steuerrohr-Öffnung
21c Anschlag
23 unterer Steuersatz
25 oberer Steuersatz
30 Rotoreinheit
31 erster Bowdenzug
31a Seele des ersten Bowdenzuges
31b Nippel (des ersten Bowdenzuges)
32 zweiter Bowdenzug
32a Seele des zweiten Bowdenzuges
32b Verbindungselement
32c Vorsprung
32d weiterer Vorsprung
33 dritter Bowdenzug
36 erstes Übertragungselement
36b Nut im ersten Übertragungselement
37 zweites Übertragungselement
37b Anbindungsbereich des zweiten Übertragungselements
41 Lagerschale
42 Steg
42a Rastnase
50 Befestigungsvorrichtung
52 Sternmutter
52a Sternmutter-Innengewinde
52b Sternmutter-Arm
52c zentrischer Sternmutter-Durchlass
52d exzentrischer Sternmutter-Durchlass
54 Kappe
54c zentrische Kappen-Öffnung
54d exzentrische Kappen-Öffnung
56 Befestigungsschraube
56a Befestigungsschrauben-Außengewinde
56b Befestigungsschrauben-Innengewinde
56c Befestigungsschrauben-Längsschlitz
56d Befestigungsschrauben-Kopf
58 Einstellschraube
58b Einstellschrauben-Außengewinde
58c Einstellschrauben-Längsschlitz
58d Einstellschrauben-Kopf
84 Halteelement
86 Unterlegscheibe
L36 Länge des freien Bereichs in der Gabelschaft-Öffnung
L37 Länge des freien Bereichs in der Steuerrohr-Öffnung
L41 Innendurchmesser

## Patentansprüche

1. Rotorsystem für ein Fahrrad (1) zur Lagerung einer Gabel (8) und zur Übertragung von Betätigungen von Bowdenzügen (31, 32), aufweisend jeweils eine Seele (31a, 32a), mit wenigstens einem ersten und einem zweiten Übertragungselement (36, 37), die relativ zueinander drehbar sind und die im Bereich der Lagerung (21, 23, 25) der Gabel (8) angeordnet sind, wobei
- die Übertragungselemente (36, 37) zumindest einen ringförmigen Bereich aufweisen, welcher auf dem Gabelschaft (12) der Gabel (8) gelagert und wenigstens in radialer Richtung von einem Steuerrohr (21) umgeben ist,
- die Seele (31a) eines ersten Bowdenzugs (31) der vorgesehenen Bowdenzüge (31, 32, 33) mit dem ersten Übertragungselement (36) verbunden ist,
- die Seele (32a) eines zweiten Bowdenzugs (32) der vorgesehenen Bowdenzüge (31, 32, 33) mit dem zweiten Übertragungselement (37) verbunden ist,
- die Übertragungselemente (36, 37) Anbindungsbereiche (36b, 37b) für die direkte oder indirekte Anbringung der rotorseitigen Enden der Seelen (31a, 32a) aufweisen, und
- das zweite Übertragungselement (37) einen innerhalb des Steuerrohres (21) angeordneten Anbindungsbereich (37b) aufweist, an welchem hilfsmittelfrei ein Verbindungselement (32b) formschlüssig anbringbar ist, wobei das Verbindungselement (32b) mit dem rotorseitigen Ende der dem zweiten Übertragungselement (37) zugeordneten Seele (32a) lösbar zusammenwirkt oder einstückig verbunden ist,
**dadurch gekennzeichnet, dass**
- die Seele (31a) des ersten Bowdenzugs (31) wenigstens abschnittsweise im Gabelschaft (12) verläuft,
- am rotorseitigen Ende der Seele (31a) des ersten Bowdenzuges (31a) ein Steg (42) vorgesehen ist, der durch langlochförmige Gabelschaft-Öffnungen (12a) in radialer Richtung über den Außenumfang des Gabelschafts (12) hinausragt, und dessen Enden vom ersten Übertragungselement (36) aufgenommen sind, und
- der Steg (42) bei der Montage, wenn er in den Gabelschaft (12) gelangt, relativ zur Seele (31a) des ersten Bowdenzuges (31) kippbar ist.

2. Rotorsystem nach Anspruch 1, **dadurch gekennzeichnet, dass** das Verbindungselement (32b) einen Vorsprung (32c) aufweist, welcher mit einer in axialer Richtung des Gabelschafts (12) verlaufenden Führungsnut als Anbindungsbereich (37b) des wenigstens einen Übertragungselements (37) zusammenwirkt, oder dass das Verbindungselement (32b) zwei Vorsprünge (32c, 32d) aufweist, welche unter elastischer Verformung in hinterschnittene Bereiche des wenigstens einen Übertragungselements (37) im Anbindungsbereich (37b) clipsartig eingreifen, wobei für den Eingriff eine elastische Verformung des Verbindungs - elements (37b) vorgesehen ist.

3. Rotorsystem nach einem der vorhergehenden Ansprüche, **dadurch gekennzeichnet, dass** das erste Übertragungselement (36) und das zweite Übertragungselement (37) teilweise miteinander fluchtend und teilweise konzentrisch zueinander angeordnet sind, insbesondere mittels Stufen (36a, 37a), und in direktem Gleitkontakt zueinander stehen.

4. Rotorsystem nach einem der vorhergehenden Ansprüche, **dadurch gekennzeichnet, dass** das Steuerrohr (21) eine Steuerrohr-Öffnung (21a) aufweist, durch welche die Verbindung zwischen der Seele (32a) eines zweiten Bowdenzugs (32) oder des Verbindungselements (37b) einerseits und des zweiten Übertragungselements (37) andererseits zugänglich ist, und/oder
dass das erste Übertragungselement (36) und/oder das zweite Übertragungselement (37) ein Kunststoffspritzgussteil ist.

5. Rotorsystem nach einem der vorhergehenden Ansprüche, **dadurch gekennzeichnet, dass** die Enden des Steges (42) vom ersten Übertragungselement (36) mittels Nuten (36b) aufgenommen sind, und dass der Steg (42) Rastnasen (42b) aufweist, mittels derer er beim Einführen in das erste Übertragungselement (36) einrastet.

6. Rotorsystem nach einem der vorhergehenden Ansprüche, **dadurch gekennzeichnet, dass** der Steg (42) mittig einen Kanal zum Durchtritt der Seele (31a) des ersten Bowdenzuges (31), auf der Unterseite eine Vertiefung zur Aufnahme eines Nippels (31b) am Ende der Seele (31a) oder eines anderweitig verdickten Endes der Seele (31a) des ersten Bowdenzuges (31), und Schrägen aufweist, die auf den Kanal ausgerichtet sind und die bei der Montage ein Kippen des Steges (42) relativ zur Seele (31a) des ersten Bowdenzuges (31) erlauben, wobei die Schrägen symmetrisch oder einseitig und auf der Oberseite und/oder auf der Untersei - te des Steges (42) ausgebildet sein können.

7. Rotorsystem nach einem der vorhergehenden Ansprüche, mit einem Bowdenzug welcher jeweils eine Seele und eine Hülle aufweist, wobei ein Verbindungselement (32b) mit einem Ende der Seele (31a, 32a) verpresst oder an diesem angespritzt oder angegossen oder anderweitig einstückig verbunden ist, oder dass ein Steg (42) auf der Seele (31a) zwischen deren Ende und der Hülle des Bowdenzuges (31) gelagert ist, wobei der Steg (42) relativ zur Seele (31a) kippbar ist.

8. Fahrrad (1) mit einem Rotorsystem nach einem der Ansprüche 1 bis 6 zur Übertragung von Bremsbetätigungen vom Lenker (18) zum Hinterrad (5).

9. Fahrrad nach Anspruch 8, **gekennzeichnet durch** einen Steuersatz (23, 25), mittels dessen die Gabel (8) im Steuerrohr (21) gelagert ist, wobei eine Lagerschale (41) des Steuersatzes (23, 25) fest mit dem Steuerrohr (21) zu verbinden ist, wobei die Lagerschale (41) an ihrer engsten Stelle einen Innendurchmesser (L41) von 36,0 ± 0,2 mm aufweist.

10. Fahrrad nach Anspruch 8 oder 9, **gekennzeichnet durch** einen Vorbau (14) und eine Befestigungsvorrichtung (50) zur Befestigung des Vorbaus (14) an dem Gabelschaft (8), welcher das Rotorsystem lagert, wobei der erste Bowdenzug (31), dessen Seele (31a) am ersten Übertragungelement (36) angebracht ist, und ein dritter Bowdenzug (33), welcher zur Übertragung von Bremsbetätigungen zum Vorderrad (10) vorgesehen ist, durch zwei Durchlässe (52c, 52d) in einer Sternmutter (52) oder einer Befestigungsschraube (56') in den Gabelschaft (12) eingeführt sind, wobei einer der beiden Durchlässe (52c, 52d) zentrisch und der andere exzentrisch angeordnet ist.

## Claims

1. Rotor system for a bicycle (1) for the bearing of a fork (8) and for the transmission of actuations of Bowden cables (31, 32) each having a core (31a, 32a), with at least a first and a second transmission element (36, 37) which are rotatable relative to one another and which are arranged in the area of the bearing (21, 23, 25) of the fork (8), wherein
- the transmission elements (36, 37) have at least a ring-shaped area, which is mounted on the fork steerer (12) of the fork (8) and is surrounded by a head tube (21) at least in radial direction,
- the core (31a) of a first Bowden cable (31) of the provided Bowden cables (31, 32, 33) is connected with the first transmission element (36),
- the core (32a) of a second Bowden cable (32) of the provided Bowden cables (31, 32, 33) is connected with the second transmission element (37),
- the transmission elements (36, 37) have connection areas (36b; 37b) for the direct or indirect attachment of the rotor side ends of the cores (31a 32a), and
- the second transmission element (37) comprises a connection area (37b) arranged inside the head tube (21), at which connection area a connecting element (32b) is form-fittingly attachable aid-free, wherein the connecting element (32b) interacts detachably with the rotor side end of the core (32a) assigned to the second transmission element (37), or is connected in one piece to it,
**characterised in, that**
- the core (31a) of the first Bowden cable (31) extends at least sectionally in the fork steerer (12),
- at the rotor side end of the core (31a), a bar (42) is provided that protrudes through oblong-hole-shaped fork steerer openings (12a) in radial direction beyond the outer circumference of the fork steerer (12), and the ends of which are received by the first transmission element (36), and
- the bar (42) during installation, when introduced into the fork steerer (12), is tiltable relatively to the core (31a) of the first Bowden cable (31).

2. Rotor system according to claim 1, **characterised in that** the connecting element (32b) comprises a jut (32c), which interacts with a guide groove as connection area (37b) of the at least one transmission element (37), extending in axial direction of the fork steerer (12), or that the connecting element (32b) comprises two juts (32c; 32d), which under elastic deformation in undercut areas of the at least one transmission element (37) engage like a clip in the connection area (37b), in which for the engagement an elastic deformation of the connecting element (37b) is provided.

3. Rotor system according to any of the preceding claims, **characterised in that** the first transmission element (36) and the second transmission element (37) are partially arranged in alignment with each other and partially concentric with one another, in particular by means of steps (36a; 37a), and are in direct sliding contact with one another.

4. Rotor system according to any of the preceding claims, **characterised in that** the head tube (21) comprises a head tube opening (21a), by which the connection between the core (32a) of a second Bowden cable (32) or that of the connecting element (37b) on the one hand and that of the at least one transmission element (37) on the other hand is accessible, and/or
that the first transmission element (36) and/or the second transmission element (37) is a plastic injection moulded part.

5. Rotor system according to any of the preceding claims, **characterised in that** the ends of bar (42) are received by the first transmission element (36) by means of grooves (36b), and that the bar (42) has catches (42b), by means of which it during the introduction is locked in position inside the first transmission element (36).

6. Rotor system according to any of the preceding claims, **characterised in that** the bar (42) comprises centrally a channel for the passage of the core (31a) of the first Bowden cable (31), a deepening on the bottom for insertion of a nipple (31b) at the end of the core (31a) or of an otherwise thickened end of the core (31a) of the first Bowden cable (31), and tilts, that are oriented towards the channel and during installation allow a tilting of the bar (42) relatively to the core (31a) of the first Bowden cable (31) wherein these tilts can be formed symmetric or unilateral and on the upper side and/or on the bottom of the bar (42).

7. Rotor system according to any of the preceding claims, having a Bowden cable with a core (31a; 32a) and a sleeve, wherein a connecting element (32b) is pressed with an end of the core (31a; 32a) or is moulded or cast or connected in one piece in another way to it, or that a bar (42) is mounted on the core (31a) between its end and the sleeve of the Bowden cable (31), the bar (42) being tiltable relatively to the core (31a).

8. Bicycle (1) with a rotor system according to one of claims 1 to 6 for the transmission of brake actuations from the handlebar (18) to the rear wheel (5).

9. Bicycle according to claim 8, **characterised by** a headset (23, 25) by means of which the fork (8) is mounted in the head tube (21), wherein a bearing cup (41) of the headset (23, 25) is to be connected firmly with the head tube (21), wherein that the bearing cup (41) at its narrowest location comprises an internal diameter (L41) of 36,0 ± 0,2 mm.

10. Bicycle according to claim 8 or 9, **characterised by** a stem (14) and a fixing device (50) for fastening the stem (14) at the fork steerer (8), which bears the rotor system, wherein a first Bowden cable (31), whose core (31a) is attached to the first transmission element (36), and a third Bowden cable (33), which is provided for transmitting brake actuations to the front wheel (10), through two passages (52c; 52d) in a star grip nut (52) or a fixing screw (56') are introduced into the fork steerer (12), in which one of the two passages (52c; 52d) is centric and the other eccentric.

## Revendications

1. Système de rotor pour une bicyclette (1) pour loger une fourche (8) et pour la transmission d'actionnements de câbles Bowden (31, 32) présentant chacun une âme (31a, 32a), avec au moins un premier et un deuxième élément de transmission (36, 37), qui peuvent tourner l'un par rapport à l'autre, et sont arrangés dans la zone de support (21, 23, 25) de la fourche (8), où
- les éléments de transmission (36, 37) présentent au moins une zone annulaire, laquelle est appuyée sur le pivot (12) de la fourche (8) et est entourée au moins en direction radiale d'un tube de direction (21),
- l'âme (31a) d'un premier câble Bowden (31) des câbles Bowden prévus (31, 32, 33) est liée au premier élément de transmission (36),
- l'âme (32a) d'un deuxième câble Bowden (32) des câbles Bowden prévus (31, 32, 33) est liée au deuxième élément de transmission (37),
- les éléments de transmission (36, 37) présentent des zones de liaison (36b, 37b) pour le montage direct ou indirect des extrémités côté rotor des âmes (31a, 32a), et
- le deuxième élément de transmission (37) comporte une zone de liaison (37b) disposée à l'intérieur du tube de direction (21), à laquelle sans moyen auxiliaire un élément de liaison (32b) peut être attaché par liaison de forme, où l'élément de liaison (32b) interagit de manière amovible avec l'extrémité côté rotor de l'âme (32a) attribuée au deuxième élément de transmission (37), ou bien est relié afin de former une pièce unique, **caractérisé en ce que**
- l'âme (31a) du premier câble Bowden (31) s'étend au moins par sections dans le pivot de fourche (12),
- à l'extrémité côté rotor de l'âme (31a) du premier câble Bowden (31a) une entretoise (42) est prévue, qui par des ouvertures en forme de trou oblong (12a) dans le pivot de fourche fait saillie en direction radiale au-delà de la circonférence externe du pivot de fourche (12), et dont les extrémités sont accueillies par le premier élément de transmission (36), et
- l'entretoise (42) pendant le montage, quand elle parvient dans le pivot de fourche (12), peut basculer par rapport à l'âme (31a) du premier câble Bowden (31).

2. Système de rotor selon la revendication 1, **caractérisé en ce que** l'élément de liaison (32b) comporte une saillie (32c), laquelle interagit avec une rainure de guidage évoluant en direction axiale du pivot de fourche (12) comme zone de liaison (37b) de l'au moins un élément de transmission (37), ou que l'élément de liaison (32b) comporte deux saillies (32c, 32d), lesquelles sous déformation élastique dans des zones contre-dépouillées de l'au moins un élément de transmission (37) s'engagent dans la zone de liaison (37b) comme une pince, où pour l'engagement une déformation élastique de l'élément de liaison (37b) est prévue.

3. Système de rotor selon l'une des revendications précédentes, **caractérisé en ce que** le premier élément de transmission (36) et le deuxième élément de transmission (37) sont arrangés partiellement s'alignant entre eux et partiellement concentriquement l'un par rapport à l'autre, en particulier par des marches (36a, 37a), et qu'ils sont en contact coulissant direct l'un vers l'autre.

4. Système de rotor selon l'une des revendications précédentes, **caractérisé en ce que** le tube de direction (21) comporte une ouverture de tube de direction (21a), par laquelle la connexion entre l'âme (32a) d'un deuxième câble Bowden (32) ou de l'élément de liaison (37b) d'une part et de l'au moins un élément de transmission (37) d'autre part est accessible, et/ou que le premier élément de transmission (36) et/ou le deuxième élément de transmission (37) est une pièce moulée par injection en plastique.

5. Système de rotor selon l'une des revendications précédentes, **caractérisé en ce que** les extrémités de l'entretoise (42) sont accueillies par le premier élément de transmission (36) par des rainures (36b), et que l'entretoise (42) comporte des cliquets d'arrêt (42b), par lesquels elle s'enclenche pendant l'introduction dans le premier élément de transmission (36).

6. Système de rotor selon l'une des revendications précédentes, **caractérisé en ce que** l'entretoise (42) comporte de façon centrale un canal pour le passage de l'âme (31a) du premier câble Bowden (31), sur la face inférieure un creux pour la réception d'un embout (31b) à l'extrémité de l'âme (31a) ou d'une extrémité épaissie d'une autre manière de l'âme (31a) du premier câble Bowden (31), et qu'elle comporte des inclinaisons qui sont orientées vers le canal et qui, pendant le montage, permettent un basculement de l'entretoise (42) par rapport à l'âme (31a) du premier câble Bowden (31), où les inclinaisons peuvent être formées symétriques ou unilatérales et sur le côté supérieur et/ou inférieur de l'entretoise (42).

7. Système de rotor selon l'une des revendications précédentes, avec un câble Bowden lequel comporte une âme et une gaine, où un élément de liaison (32b) est comprimé avec une extrémité de l'âme (31a, 32a) ou moulé par injection ou coulé sur celle-ci, ou relié d'une autre manière afin de former une pièce unique, ou qu'une entretoise (42) est appuyée sur l'âme (31a) entre ses extrémités et la gaine du câble Bowden (31), et l'entretoise (42) peut basculer par rapport à l'âme (31a).

8. Bicyclette (1) avec un système de rotor selon l'une des revendications 1 à 6 pour la transmission de commandes de frein du guidon (18) à la roue postérieure (5).

9. Bicyclette selon la revendication 8, **caractérisée par** un jeu de direction (23, 25), par lequel la fourche (8) est appuyée dans le tube de direction (21), où une cuvette de roulement (41) du jeu de direction (23, 25) est reliée fermement au tube de direction (21), où la cuvette de roulement (41) dans son endroit le plus étroit comporte un diamètre intérieur (L41) de 36,0 ± 0,2 mm.

10. Bicyclette selon la revendication 8 ou 9, **caractérisée par** une potence (14) et un dispositif de fixage (50) pour la fixation de la potence (14) au pivot de fourche (8), lequel supporte le système de rotor, où le premier câble Bowden (31), dont l'âme (31a) est appliquée au premier élément de transmission (36), et un troisième câble Bowden (33), lequel est prévu pour la transmission de commandes de frein à la roue avant (10), sont introduits dans le pivot de fourche (12) par deux passages (52c, 52d) prévus dans un écrou en étoile (52) ou une vis de fixation (56'), où l'un des deux passages (52c, 52d) est arrangé de manière centrique et l'autre excentrique.
